# EUROPÄISCHE PATENTSCHRIFT

(11) **EP 2 839 607 B1**
(45) Veröffentlichungstag und Bekanntmachung des Hinweises auf die Patenterteilung: **12.04.2017**
(21) Anmeldenummer: 13739382.3
(22) Anmeldetag: 10.07.2013
(51) Int. Cl.: H04L 12/24

(54) **VERFAHREN UND RECHENEINHEIT ZUR RECHNERGESTÜTZTEN KONFIGURATION EINES NETZWERKES**
METHOD AND COMPUTATION UNIT FOR THE COMPUTER-AIDED CONFIGURATION OF A NETWORK
PROCÉDÉ ET UNITÉ DE CALCUL POUR LA CONFIGURATION ASSISTÉE PAR ORDINATEUR D'UN RÉSEAU

(30) Priorität: 11.07.2012 DE 102012212073
(43) Veröffentlichungstag der Anmeldung: 25.02.2015
(73) Patentinhaber: Siemens Aktiengesellschaft, 80333 München (DE)
(72) Erfinder: SCHEFFEL, Matthias, 82008 Unterhaching (DE); HOUYOU, Amine, Mohamed, 81539 München (DE); KULKARNI, Vivek, 82008 Unterhaching (DE); ZIRKLER, Andreas, 81671 München (DE)
(86) Internationale Anmeldenummer: PCT/EP2013/064592
(87) Internationale Veröffentlichungsnummer: WO 2014/009419

(56) Entgegenhaltungen:
- US-A- 5 687 315
- US-A1- 2008 281 947

## Beschreibung

Die vorliegende Erfindung betrifft ein Verfahren und eine Recheneinheit zur rechnergestützten Konfiguration eines Netzwerkes.

In der Fabrik- und Prozessautomation werden industrielle Ethernet-Netzwerk-Technologien wie PROFINET eingesetzt, um Echtzeitkommunikations-Eigenschaften eines Netzwerkes wie beispielsweise eines Automatisierungsnetzwerkes garantieren zu können. Ein Automatisierungsnetzwerk besteht aus Controllern, die Eingabedaten von Sensoren empfangen, Berechnungen ausführen und auf einer Kontrollapplikation basierende Ausgabedaten an Aktuatoren senden. Controller, Sensoren und Aktuatoren stellen die Knoten des Automatisierungsnetzwerkes dar, die Verbindungen zwischen den Knoten entsprechen den Kanten des Automatisierungsnetzwerkes. Als Pfad im Automatisierungsnetzwerk wird ein Weg von einem Knoten zu einem anderen Knoten über Kanten bezeichnet, in dem keine Kante mehrfach genutzt wird.

Die Erstellung eines Automatisierungsnetzwerkes erfordert ein Vorkonfigurieren aller Knoten des zu erstellenden Automatisierungsnetzwerkes vor der Inbetriebnahme. Jedem Knoten müssen eine IP-Adresse sowie ein Name zugewiesen werden. Weiterhin muss jedem Knoten ein Programm zugewiesen werden, dass das gewünschte Verhalten des Knotens hinsichtlich einer Verarbeitung von Eingabedaten und einer Erzeugung von Ausgabedaten implementiert.

Planungswerkzeuge wie beispielsweise STEP7 unterstützen den Entwurf eines Automatisierungsnetzwerkes. Allerdings erfordern herkömmliche Planungswerkzeuge in der Regel einen manuellen Schritt, um die virtuellen Knoten des Planungswerkzeuges auf die physischen Knoten einer Fabrik abzubilden und um sicherzustellen, dass die Netzwerkeinrichtungen des Automatisierungsnetzwerkes wie gewünscht konfiguriert werden. In herkömmlichen Automatisierungsnetzwerken ist ein Knoten durch eine eindeutige Ethernet-MAC-Adresse identifiziert. Für das Aufspielen der Konfigurationen durch das Planungswerkzeug auf die entsprechenden Knoten beziehungsweise Netzwerkeinrichtungen des Automatisierungsnetzwerkes wird ein Benutzer oder Operator aufgefordert, für einen virtuellen Knoten manuell den korrespondierenden physikalischen Knoten auszuwählen. Die Auswahl geschieht durch Auswählen der Netzwerkeinrichtung mit der korrekten MAC-Adresse. Da die MAC-Adresse eine eindeutige Identifizierung für die betreffende Netzwerkeinrichtung darstellt, die vom Hersteller vorbestimmt ist, muss der Operator in den Abbildungsprozess eingebunden werden, um die MAC-Adresse sowohl in dem physischen Automatisierungsnetzwerk als auch in dem virtuellen Netzwerk des Planungswerkzeuges zu identifizieren. Dieser manuelle Schritt ist zeitaufwändig und fehleranfällig.

Planungswerkzeuge wie beispielsweise STEP7 können den Benutzer dadurch unterstützen, dass sie die Menge der für eine Abbildung in Frage kommenden physischen Knoten einschränken. Diese Einschränkung basiert beispielsweise darauf, dass nur Knoten eines gewünschten Knotentyps angezeigt werden. Knotentypen beziehen sich beispielsweise auf Typen von Controllern, Netzwerkeinrichtungen oder Switches. Basierend auf dem Knotentyp, der dem Planungswerkzeug als Attribut für jeden Knoten des Netzwerkes zur Verfügung gestellt werden kann, fragt das Planungswerkzeug alle entsprechenden Knoten im Automatisierungsnetzwerk ab. Das Ergebnis wird dem Benutzer als Liste aller Netzwerkeinrichtungen dieses Knotentyps präsentiert. Der Benutzer wird dann aufgefordert, den korrekten Knoten auszuwählen. Ferner kann die Netzwerktopologie ermittelt werden, um sicherzustellen, dass die physische Topologie der im Automatisierungsnetzwerk verbundenen Netzwerkeinrichtungen mit der Topologie des geplanten virtuellen Netzwerkes übereinstimmt. Mit dem Begriff Topologie bezeichnet man bei einem Netzwerk die Struktur der Verbindungen mehrerer Knoten oder Netzwerkeinrichtungen untereinander, die sich für jeden einzelnen Knoten beispielsweise durch Nachbarschaftsinformationen zu Nachbarknoten des betreffenden Knotens ausdrücken lassen. In diesem Zusammenhang offenbart die Patentschrift US 2008/281947 A1 ein Verfahren zur automatischen Erfassung und Darstellung einer Netzwerktopologie. Es sind somit Vorschläge bekannt, den Schritt der Abbildung der virtuellen Knoten auf die physischen Knoten zumindest teilweise zu automatisieren. Dabei wird die Topologie des Automatisierungsnetzwerkes verwendet, um automatisch zu ermitteln, wo im Automatisierungsnetzwerk eine Netzwerkeinrichtung angeordnet ist. Die so ermittelte Position der betreffenden Netzwerkeinrichtung wird mit der geplanten Topologie des virtuellen Netzwerkes im Planungswerkzeug verglichen. Auf diese Weise ist sichergestellt, dass die betreffende Netzwerkeinrichtung an der korrekten Netzwerk-Kante angeordnet ist, so dass eine automatische Konfiguration der Netzwerkeinrichtung erfolgen kann. Allerdings geht dieser Ansatz von der Annahme aus, dass die Topologie des Automatisierungsnetzwerkes und die Topologie des geplanten, virtuellen Netzwerkes identisch sind, und dass während des Abbildungsprozesses immer nur eindeutige Netzwerk-Positionen auftreten.

Ein Problem bekannter Methoden besteht darin, dass es nicht möglich ist, mehrdeutige Netzwerkkonfigurationen zu vermeiden, bei denen die Information über den Knotentyp und die Topologie zu einem eine Netzwerkeinrichtung repräsentierenden Knoten nicht ausreicht, um die einem virtuellen Knoten des virtuellen Netzwerkes entsprechende Netzwerkeinrichtung eindeutig zu identifizieren.

Die dargestellten Probleme bestehen allgemein bei der Konfiguration von Netzwerken, beispielsweise Kommunikationsnetzwerken zur Energieverteilung.

Demnach ist eine Aufgabe der vorliegenden Erfindung, ein verbessertes Verfahren und eine verbesserte Recheneinheit zur rechnergestützten Konfiguration eines Netzwerkes zu schaffen. Demgemäß wird ein Verfahren zur rechnergestützten Konfiguration einer Mehrzahl von physischen Knoten eines zu erstellenden Netzwerkes unter Verwendung eines virtuellen Netzwerkes mittels einer Recheneinheit vorgeschlagen. Das virtuelle Netzwerk umfasst für jeden physischen Knoten je einen virtuellen Knoten. Das Verfahren umfasst folgende Schritte: Erstellen des virtuellen Netzwerkes basierend auf dem zu erstellenden Netzwerk, wobei für jeden virtuellen Knoten je eine Konfiguration bestimmt wird; Ermitteln eines Merkmalsvektors für jeden virtuellen Knoten, wobei der ermittelte Merkmalsvektor Nachbarschaftsinformationen zu Nachbarknoten des virtuellen Knotens und eine Typinformation zu einem Knotentyp des virtuellen Knotens umfasst; Verändern des virtuellen Netzwerkes, falls zumindest zwei ermittelte Merkmalsvektoren identisch sind, so dass jeder virtuelle Knoten eindeutig einem physischen Knoten zugeordnet wird; und Überspielen der Konfiguration jedes virtuellen Knotens auf den jeweiligen zugeordneten physischen Knoten. Weiterhin umfasst das Verändern des virtuellen Netzwerkes ein Verändern von zumindest einem Pfad zwischen einem virtuellen Knoten, für welchen einer der zumindest zwei identischen Merkmalsvektoren ermittelt ist, und dessen Nachbarknoten.

Das vorgeschlagene Verfahren ermöglicht es, alle virtuelle Knoten eines virtuellen Netzwerkes, das beispielsweise mit Hilfe eines Planungswerkzeuges entworfen ist, eindeutig auf physische Knoten und somit auf Netzwerkeinrichtungen eines zu erstellenden Netzwerkes beispielsweise in einer Fabrik abzubilden. Der Entwurfsprozess eines zu erstellenden Netzwerkes, insbesondere der bisher manuell durchzuführende Schritt der Abbildung der virtuellen Knoten auf die physischen Knoten, wird dabei vereinfacht. Fehler bei der Zuordnung von geplanten Funktionen zu den Netzwerkeinrichtungen des Netzwerkes werden vermieden. Weiterhin wird der Planungs- und Entwurfsprozess eines Netzwerkes beschleunigt, da der in herkömmlichen Planungs- und Entwurfswerkzeugen notwendige manuelle Abbildungsschritt im Rahmen des vorgeschlagenen Verfahrens automatisiert ausgeführt wird.

Das Verfahren ist für die Konfiguration verschiedener Netzwerke geeignet wie beispielsweise Automatisierungsnetzwerke oder Kommunikationsnetzwerke zur Energieverteilung.

Das Verändern eines oder mehrerer Pfade für einen nicht-eindeutigen Teil des Netzwerkes ändert die Funktionalität des Netzwerkes bzw. des Teils des Netzwerkes nicht, ermöglicht es aber, eine eindeutige Abbildung des virtuellen Knotens auf einen physischen Knoten vorzunehmen. Nicht eindeutig bedeutet, dass die Position eines virtuellen Knotens im virtuellen Netzwerk nicht eindeutig auf eine physische Netzwerkeinrichtung im zu erstellenden Netzwerk abgebildet werden kann.

Bei dem Teil des Netzwerkes, der keine eindeutige Zuordnung des virtuellen Knotens zu einem physischen Knoten ermöglicht, kann es sich beispielsweise um eine sternförmige Topologie handeln, bei der beispielsweise ein erster Knoten eines ersten Knotentyps über einen Switch mit vier zweiten Knoten eines zweiten Knotentyps verbunden ist, so dass zunächst alle vier zweiten Knoten identische Merkmalsvektoren aufweisen, wodurch eine eindeutige Identifizierung eines der vier zweiten Knoten unmöglich ist. Durch das Verändern eines oder mehrerer Pfade zwischen diesen vier zweiten Knoten werden die jeweiligen Merkmalsvektoren entsprechend verändert, sodass die vier zweiten Knoten unterscheidbar sind. Dies ermöglicht eine noch bessere automatische Zuordnung von virtuellen Knoten zu physischen Knoten.

In Ausführungsformen des Verfahrens umfasst der ermittelte Merkmalsvektor jedes virtuellen Knotens ferner eine Liste von Attributen des virtuellen Knotens.

Die Liste von Attributen ermöglicht eine noch bessere automatische Zuordnung von virtuellen Knoten zu physischen Knoten, da jedes der Attribute der Liste als Unterscheidungskriterium zu anderen Knoten dient.

In weiteren Ausführungsformen des Verfahrens umfasst das Verändern des virtuellen Netzwerkes ein Verändern einer Sequenz von Nachbarknoten eines virtuellen Knotens.

Eine Sequenz von Knoten ist eine lineare Anordnung von Knoten im Netzwerk. Falls beispielsweise ein erster Knoten eines ersten Knotentyps einen linken Nachbarn und einen rechten Nachbarn jeweils des gleichen, zweiten Knotentyps hat, unterscheiden sich die Merkmalsvektoren des linken und des rechten Nachbarn nicht, so dass eine eindeutige Identifizierung hinsichtlich des linken und des rechten Nachbarknotens nicht möglich ist. Das Verändern der Sequenz der Nachbarknoten, beispielsweise durch Vertauschen der Positionen des ersten Knotens und des rechten Nachbarknotens, ergeben sich unterschiedliche Merkmalsvektoren für die zwei Knoten des zweiten Knotentyps, so dass die zweiten Knoten des zweiten Knotentyps unterscheidbar sind. Dies ermöglicht eine noch bessere automatische Zuordnung von virtuellen Knoten zu physischen Knoten.

In weiteren Ausführungsformen des Verfahrens umfasst das Verändern der Sequenz der Nachbarknoten des virtuellen Knotens, für welchen einer der zumindest zwei identischen Merkmalsvektoren ermittelt ist, ein Einfügen mindestens eines weiteren virtuellen Knotens in die Sequenz der Nachbarknoten.

Auf diese Weise ergeben sich wiederum unterschiedliche Merkmalsvektoren für die jeweiligen virtuellen Knoten. Dies ermöglicht eine noch bessere automatische Zuordnung von virtuellen Knoten zu physischen Knoten.

In weiteren Ausführungsformen des Verfahrens umfasst das Verändern des virtuellen Netzwerkes ein Verändern des Knotentyps eines virtuellen Knotens, für welchen einer der zumindest zwei identischen Merkmalsvektoren ermittelt ist.

Da der Knotentyp Teil des Merkmalsvektors eines virtuellen Knotens ist, ergeben sich wiederum unterschiedliche Merkmalsvektoren für die jeweiligen virtuellen Knoten. Dies ermöglicht eine noch bessere automatische Zuordnung von virtuellen Knoten zu physischen Knoten.

In weiteren Ausführungsformen des Verfahrens umfasst das Verändern des virtuellen Netzwerkes ein Verändern der Liste von Attributen eines virtuellen Knotens, für welchen einer der zumindest zwei identischen Merkmalsvektoren ermittelt ist.

Die Liste von Attributen ermöglicht eine noch bessere automatische Zuordnung von virtuellen Knoten zu physischen Knoten, da jedes der Attribute der Liste als Unterscheidungskriterium zu anderen Knoten dient. Da die Liste von Attributen Teil des Merkmalsvektors eines virtuellen Knotens ist, ergeben sich wiederum unterschiedliche Merkmalsvektoren für die jeweiligen virtuellen Knoten. Dies ermöglicht eine noch bessere automatische Zuordnung von virtuellen Knoten zu physischen Knoten.

In weiteren Ausführungsformen des Verfahrens umfasst das Verändern der Liste von Attributen ein Hinzufügen einer Angabe von Ports, über die der virtuelle Knoten, für welchen einer der zumindest zwei identischen Merkmalsvektoren ermittelt ist, mit einem direkten Nachbarknoten verbunden ist.

Die Angabe von Verbindungsports ermöglicht eine noch bessere automatische Zuordnung von virtuellen Knoten zu physischen Knoten, da unterschiedliche Verbindungsports als Unterscheidungskriterium zu anderen Knoten dienen.

In weiteren Ausführungsformen des Verfahrens umfasst das Verändern des virtuellen Netzwerkes ein Hinzufügen einer Nachbarschaftsbeziehung zu einem ausgezeichneten Knoten des Netzwerkes zu den Nachbarschaftsinformationen eines virtuellen Knotens, für welchen einer der zumindest zwei identischen Merkmalsvektoren ermittelt ist.

Ein solcher ausgezeichneter Knoten ist beispielsweise eine so genannte Engineering-Station in einem Automatisierungsnetzwerk. Eine Engineering-Station ist eine Netzwerkeinrichtung, die beispielsweise zur Inbetriebnahme, Konfiguration und Wartung eines Automatisierungsnetzwerkes dient, und über die beispielsweise Topologie- und Typ-Abfragen im Netzwerk ermöglicht werden. Die Angabe der relativen Position der Engineering-Station zu einem virtuellen Knoten ermöglicht eine noch bessere automatische Zuordnung von virtuellen Knoten zu physischen Knoten, da die relative Position der Engineering-Station zu einem virtuellen Knoten als Unterscheidungskriterium zu anderen Knoten dient.

In weiteren Ausführungsformen des Verfahrens umfasst eine Konfiguration zumindest eine IP-Adresse, eine Knotenbezeichnung und eine Knotenprogrammierung.

Die IP-Adresse sowie die Knotenbezeichnung dienen der Identifizierung eines Knotens, die Knotenprogrammierung legt die Funktionalität der betreffenden zugehörigen Netzwerkeinrichtung hinsichtlich ihrer Eingabe und Ausgabe fest. Durch die frei programmierbare Konfiguration kann einer Netzwerkeinrichtung eine beliebige Funktion im zu erstellenden Netzwerk zugewiesen werden.

In weiteren Ausführungsformen des Verfahrens wird jeder physische Knoten eindeutig durch eine Netzwerkadresse identifiziert.

Die Netzwerkadresse kann beispielsweise als Ethernet-MAC-Adresse ausgestaltet sein.

Weiterhin wird ein Computerprogrammprodukt vorgeschlagen, welches auf einer programmgesteuerten Einrichtung die Durchführung des vorgeschlagenen Verfahrens veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie im Folgenden beschriebene Recheneinheit in Frage.

Es wird zudem ein Datenträger mit einem gespeicherten Computerprogramm mit Befehlen vorgeschlagen, welche die Durchführung des vorgeschlagenen Verfahrens auf einer programmgesteuerten Einrichtung veranlasst.

Weiterhin wird eine Recheneinheit zur Konfiguration einer Mehrzahl von physischen Knoten eines zu erstellenden Netzwerkes unter Verwendung eines virtuellen Netzwerkes vorgeschlagen. Das virtuelle Netzwerk umfasst für jeden physischen Knoten je einen virtuellen Knoten. Die Recheneinheit umfasst ein erstes Mittel zum Erstellen des virtuellen Netzwerkes basierend auf dem zu erstellenden Netzwerk, wobei für jeden virtuellen Knoten je eine Konfiguration bestimmbar ist; ein zweites Mittel zum Ermitteln eines Merkmalsvektors für jeden virtuellen Knoten, wobei der ermittelte Merkmalsvektor Nachbarschaftsinformationen zu Nachbarknoten des virtuellen Knotens und eine Typinformation zu einem Knotentyp des virtuellen Knotens umfasst; ein drittes Mittel zum Verändern des virtuellen Netzwerkes, falls zumindest zwei ermittelte Merkmalsvektoren identisch sind, so dass jeder virtuelle Knoten eindeutig einem physischen Knoten zugeordnet wird; und ein viertes Mittel zum Überspielen der Konfiguration jedes virtuellen Knotens auf den jeweiligen zugeordneten physischen Knoten.

Das jeweilige Mittel, erstes, zweites, drittes und viertes Mittel, kann hardwaretechnisch und/oder auch softwaretechnisch implementiert sein. Bei einer hardwaretechnischen Implementierung kann das jeweilige Mittel als Vorrichtung oder als Teil einer Vorrichtung, zum Beispiel als Computer oder als Mikroprozessor ausgebildet sein. Bei einer softwaretechnischen Implementierung kann das jeweilige Mittel als Computerprogrammprodukt, als eine Funktion, als eine Routine, als Teil eines Programmcodes oder als ausführbares Objekt ausgebildet sein.

Die vorgeschlagene Recheneinheit ermöglicht eine automatische Zuordnung von virtuellen Knoten zu physischen Knoten.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens oder der Recheneinheit. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: ein Beispiel für eine nicht-eindeutige Topologie eines Netzwerksegments;
- Fig. 2: ein weiteres Beispiel für eine nicht-eindeutige Topologie eines Netzwerksegments;
- Fig. 3: ein Blockdiagramm eines Ausführungsbeispiels eines Verfahrens zur rechnergestützten Konfiguration einer Mehrzahl von physischen Knoten eines zu erstellenden Netzwerkes unter Verwendung eines virtuellen Netzwerkes;
- Fig. 4: ein Beispiel einer gemäß dem vorgeschlagenen Verfahren geänderten Topologie eines Netzwerksegments;
- Fig. 5: ein weiteres Beispiel einer gemäß dem vorgeschlagenen Verfahren geänderten Topologie eines Netzwerksegments;
- Fig. 6: ein weiteres Beispiel einer gemäß dem vorgeschlagenen Verfahren geänderten Topologie eines Netzwerksegments;
- Fig. 7: ein weiteres Beispiel einer gemäß dem vorgeschlagenen Verfahren geänderten Topologie eines Netzwerksegments;
- Fig. 8: ein weiteres Beispiel einer gemäß dem vorgeschlagenen Verfahren geänderten Topologie eines Netzwerksegments;
- Fig. 9: ein weiteres Beispiel einer gemäß dem vorgeschlagenen Verfahren geänderten Topologie eines Netzwerksegments;
- Fig. 10: ein weiteres Beispiel einer gemäß dem vorgeschlagenen Verfahren geänderten Topologie eines Netzwerksegments;
- Fig. 11: ein weiteres Beispiel einer gemäß dem vorgeschlagenen Verfahren geänderten Topologie eines Netzwerksegments; und
- Fig. 12: ein Blockschaltbild einer Recheneinheit zur Konfiguration einer Mehrzahl von physischen Knoten eines zu erstellenden Netzwerkes unter Verwendung eines virtuellen Netzwerkes.

In den Figuren sind gleiche oder funktionsgleiche Elemente mit denselben Bezugszeichen versehen worden, sofern nichts anderes angegeben ist.

Das vorgeschlagene Verfahren und die vorgeschlagene Recheneinheit dienen der eindeutigen Abbildung virtueller Knoten eines mittels eines Planungswerkzeuges geplanten virtuellen Netzwerkes auf physikalische Knoten, das heißt Netzwerkeinrichtungen wie Controllern, Sensoren und Aktuatoren eines zu erstellenden Netzwerkes, beispielsweise eines Automatisierungsnetzwerkes. Die Identifizierung eines einem virtuellen Knoten entsprechenden physischen Knotens und somit einer Netzwerkeinrichtung in dem zu erstellenden Automatisierungsnetzwerk wird dabei basierend auf dem betreffenden Knotentypen sowie der Topologie, das heißt der Struktur der Verbindungen des physischen Knotens zu seinen Nachbarknoten, vorgenommen. Wie oben dargestellt, gibt es jedoch Netzwerkkonfigurationen beziehungsweise Anordnungen von Knoten in einem Automatisierungsnetzwerk, in denen eine Identifizierung eines Knotens beziehungsweise einer Netzwerkeinrichtung in einem Automatisierungsnetzwerk allein auf Knotentyp und Nachbarschaftsinformationen zu Nachbarknoten nicht eindeutig vorgenommen werden kann.

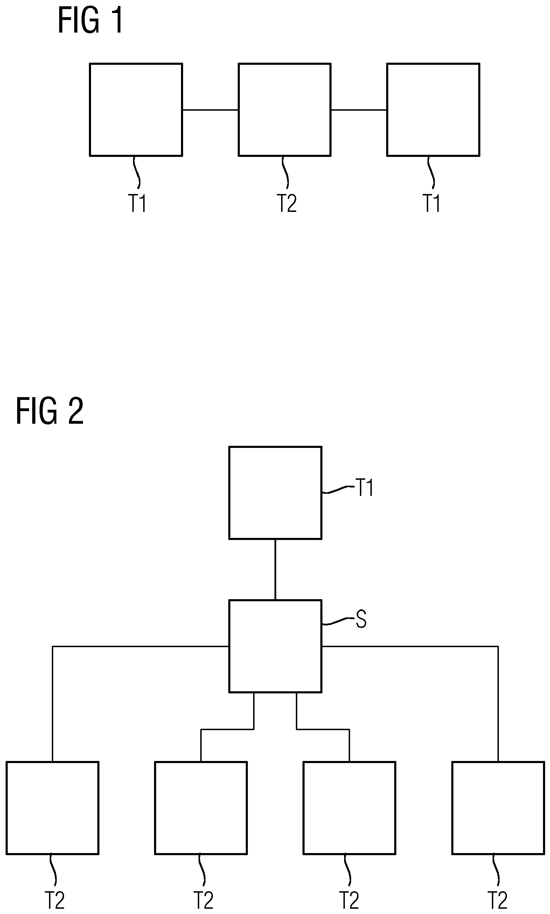

Fig. 1 und Fig. 2 zeigen Beispiele für derartige Netzwerkkonfigurationen. Im Folgenden wird für Netzwerkkonfiguration oder Anordnung von Knoten auch der Begriff des Netzwerksegments verwendet. Ein Netzwerksegment ist definiert als ein Teil eines größeren, zusammenhängenden Netzwerkes, das einen oder mehrere durch Kanten verbundene Knoten umfasst.

Netzwerksegmente wie in Fig. 1 und 2 dargestellt können auch als symmetrische Netzwerksegmente bezeichnet werden. Der geometrische Begriff Symmetrie bezeichnet die Eigenschaft, dass ein Objekt, hier ein Netzwerksegment, durch bestimmte Umwandlungen auf sich selbst abgebildet werden kann, also unverändert erscheint. Die Anwendung des vorgeschlagenen Verfahrens erzeugt entsprechend asymmetrische Netzwerksegmente.

In Fig. 1 ist ein Beispiel für eine nicht-eindeutige Topologie eines Netzwerksegments dargestellt.

Nicht eindeutig bedeutet im Folgenden, dass die Position eines virtuellen Knotens im virtuellen Netzwerk nicht eindeutig auf eine physische Netzwerkeinrichtung im zu erstellenden Netzwerk abgebildet werden kann.

Das Netzwerksegment umfasst drei Knoten T1, T2, T1 des Typs T1 bzw. T2. Für jeden Knoten T1, T2, T1 wird ein Merkmalsvektor ermittelt. Der Merkmalsvektor enthält Nachbarschaftsinformationen zu Nachbarknoten des betreffenden Knotens T1, T2, T1 sowie eine Angabe des jeweiligen Knotentyps.

Für den linken Knoten T1 in Fig. 1 hat der Merkmalsvektor die Form {{T2;T1}, T1}. Der rechte Knoten T1 in Fig. 1 hat den Merkmalsvektor {{T2;T1}, T1}. Sowohl für den linken Knoten T1 als auch für den rechten Knoten T1 ergibt sich somit der gleiche Merkmalsvektor, da sowohl die Nachbarschaftsinformationen zu Nachbarknoten als auch der Knotentyp sowohl für den linken Knoten T1 als auch für den rechten Knoten T1 identisch sind.

Es ist bei der in Fig. 1 dargestellten Topologie somit nicht möglich, den linken Knoten T1 von dem rechten Knoten T1 zu unterscheiden, wenn zur Identifizierung eines Knotens nur Nachbarschaftsinformationen, das heißt die Topologie, und Knotentyp berücksichtigt werden.

In Fig. 2 ist ein weiteres Beispiel für eine nicht-eindeutige Topologie eines Netzwerksegments dargestellt. Fig. 2 zeigt eine Sterntopologie, bei der ein erster Knoten T1 des Knotentyps T1 über einen Switch S mit vier zweiten Knoten T2 des Knotentyps T2 verbunden ist. Auch in diesem Beispiel entsprechen sich die Merkmalsvektoren der vier zweiten Knoten T2 aufgrund identischer Nachbarschaftsinformationen und identischem Knotentyp für alle zweiten Knoten T2, so dass eine eindeutige Identifizierung eines der vier zweiten Knoten T2 nicht möglich ist, wenn nur die Topologie sowie der Knotentyp zur Unterscheidung herangezogen werden.

Das vorgeschlagene Verfahren und die vorgeschlagene Recheneinheit basieren auf der Möglichkeit, die Topologie des zu erstellenden Netzwerkes sowie den Knotentyp jedes physischen Knotens im Netzwerk abzufragen. Beispiele für Knotentypen sind I/O-Controller des Typs SIMATIC S7-200, -300, 400, 1200, I/O-Devices des Typs SIMATIC ET 200S, 200M, 200L oder Switches des Typs SCALANCE X-200, X-300, X-400, X-500. Topologie-Informationen und Informationen zu Knotentypen können beispielsweise durch den Einsatz von auf dem Simple Network Management Protocol (SNMP) basierenden Abfragen ermittelt werden. Nachbarschaftsinformationen zu Nachbarknoten eines Knotens können beispielsweise durch Abfragen ermittelt werden, die auf dem Link Layer Discovery Protocol (LLDP) basieren.

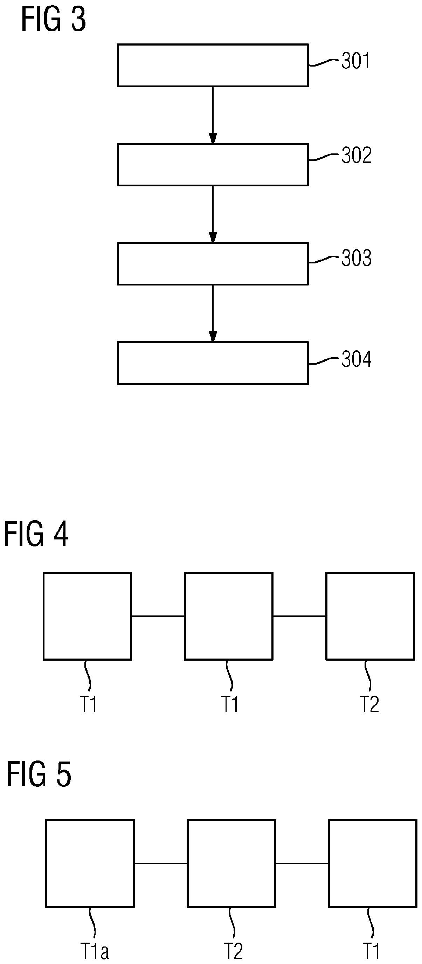

Fig. 3 zeigt ein Blockdiagramm eines Ausführungsbeispiels eines Verfahrens zur rechnergestützten Konfiguration einer Mehrzahl von physischen Knoten eines zu erstellenden Netzwerkes unter Verwendung eines virtuellen Netzwerkes.

In Schritt 301 erfolgt ein Erstellen des virtuellen Netzwerkes basierend auf dem zu erstellenden Netzwerk, wobei für jeden virtuellen Knoten je eine Konfiguration bestimmt wird.

In Schritt 302 erfolgt ein Ermitteln eines Merkmalsvektors für jeden virtuellen Knoten, wobei der ermittelte Merkmalsvektor Nachbarschaftsinformationen zu Nachbarknoten des virtuellen Knotens und eine Typinformation zu einem Knotentyp des virtuellen Knotens umfasst.

In Schritt 303 erfolgt ein Verändern des virtuellen Netzwerkes, falls zumindest zwei ermittelte Merkmalsvektoren identisch sind, so dass jeder virtuelle Knoten eindeutig einem physischen Knoten zugeordnet wird.

In Schritt 304 erfolgt ein Überspielen der Konfiguration jedes virtuellen Knotens auf den jeweiligen zugeordneten physischen Knoten.

Ein entsprechender Algorithmus zur Umsetzung des vorgeschlagenen Verfahrens kann wie folgt formuliert werden.

In Schritt 301 wird das virtuelle Netzwerk erstellt, wobei für jeden virtuellen Knoten je eine Konfiguration bestimmt wird.

In Schritt 302 wird jeder physischen Netzwerkeinrichtung j eine Topologie- oder Nachbarschaftsinformation Topⱼ zugeordnet. Diese Nachbarschaftsinformation beschreibt die Position der Netzwerkeinrichtung j im Netzwerk und kann beispielsweise durch Hop-Sequenzen zwischen der Netzwerkeinrichtung j und einer Referenz-Netzwerkeinrichtung angegeben werden oder durch direkte One-hop-Nachbarn. Jede Netzwerkeinrichtung j hat zudem eine Typinformation Tⱼ, die den Typ der Netzwerkeinrichtung j spezifiziert. Zur weiteren Spezifizierung der Netzwerkeinrichtung kann der Netzwerkeinrichtung j weiterhin eine Liste von Attributen Aⱼ zugeordnet werden. Die Liste von Attributen Aⱼ kann beispielsweise semantische Information enthalten, die zur Unterscheidung der Netzwerkeinrichtung j von anderen Netzwerkeinrichtungen genutzt werden können, beispielsweise I/O-Device mit Sensor, Aktuator-Rolle, Subtyp-Informationen oder Seriennummern.

Während der Planungsphase können die genannten Variablen Topⱼ, Tⱼ, Aⱼ für jede physische Netzwerkeinrichtung j ermittelt beziehungsweise abgefragt werden. Dazu werden Bootstrap-Protokolle und Prozeduraufrufe verwendet, wie beispielsweise LLDP-Nachrichten oder SNMP-Traps unter Zugriff auf vordefinierte LLDP-Management Information Bases (MIBs). Die genannten Protokolle ermöglichen ein Ermitteln der genannten Variablen Topⱼ, Tⱼ, Aⱼ durch die Engineering-Station ES. Im Ergebnis liegen der Engineering-Station die abgefragten Informationen zu einer Netzwerkeinrichtung j in Form der Variablen Topⱼ, Tⱼ, Aⱼ vor.

Entsprechende Abfragen werden für die virtuelle Instanz i der Netzwerkeinrichtung vorgenommen, so dass der Engineering-Station auch die Variablen Topᵢ, Tᵢ, Aᵢ vorliegen.

Die Variablen Topⱼ, Tⱼ, Aⱼ und Topᵢ, Tᵢ, Aᵢ stellen die Merkmalsvektoren für i und j dar. Die ermittelten Variablen beziehungsweise Merkmalsvektoren für i und j werden im Anschluss miteinander verglichen, wie im Folgenden ausgeführt.

Die Variablen bezüglich der Topologie, des Knotentyps und der Liste von Attributen Topⱼ, Tⱼ, Aⱼ der physischen Netzwerkeinrichtung werden auf eine eindeutige Position f(Topⱼ, Tⱼ, Aⱼ) im zu erstellenden Netzwerk abgebildet. Die eindeutige Position f(Topⱼ, Tⱼ, Aⱼ) kann mit einer Position der geplanten virtuellen Position f(Topᵢ, Tᵢ, Aᵢ) der virtuellen Instanz i verglichen werden. Die Netzwerkadresse der geplanten Instanz i kann der physischen Netzwerkeinrichtung zugewiesen werden.

In Schritt 303 erfolgt eine Erkennung nicht-eindeutiger, symmetrischer Netzwerksegmente. Die Merkmalsvektoren Topⱼ,
Tⱼ, Aⱼ dürfen für keine zwei virtuellen Knoten identisch sein, da ansonsten keine eindeutige Abbildung eines betreffenden virtuellen Knotens auf die entsprechende physische Netzwerkeinrichtung möglich ist. Da das Planungswerkzeug zur Identifizierung lediglich Knotentyp, Nachbarschaftsinformationen und gegebenenfalls eine Liste von Attributen zur Unterscheidung verschiedener virtueller Knoten verwendet, muss für den Fall zweier identischer Merkmalsvektoren für zwei virtuelle Knoten eine Veränderung des virtuellen Netzwerkes vorgenommen werden, so dass im Ergebnis jeder virtuelle Knoten wieder eindeutig einer physischen Netzwerkeinrichtung zugewiesen werden kann.

Daher erfolgt in Schritt 303 ein Verändern des virtuellen Netzwerkes, um nicht-eindeutige Positionen oder Netzwerksegmente im virtuellen Netzwerk zu vermeiden. Das Verändern erfolgt im Planungswerkzeug durch Verändern der Kanten des virtuellen Netzwerks.

Im letzten Schritt 304 des Algorithmus erfolgt ein Überspielen der Konfiguration jedes virtuellen Knotens auf den jeweiligen zugeordneten physischen Knoten des Netzwerkes.

Bevor das Überspielen 304 der Konfiguration jedes virtuellen Knotens auf den jeweiligen zugeordneten physischen Knoten erfolgt, wird das Netzwerk, insbesondere das Automatisierungsnetzwerk, gemäß dem in den Schritten 301-303 entworfenen virtuellen Netzwerk als physisches Netzwerk beispielsweise in einer Fabrik aufgebaut.

Das vorgeschlagene Verfahren dient damit insbesondere dem Herstellen eines Netzwerks.

Das Verändern des virtuellen Netzwerkes in Schritt 303 kann auf verschiedene Weise geschehen, wie im Folgenden beispielhaft anhand der in Fig. 1 und 2 gezeigten nicht-eindeutigen Topologien zweier Netzwerksegmente dargestellt wird. Es ist dabei hinreichend, eine der im Folgenden dargestellten Änderungsstrategien anzuwenden. Kombinationen von Änderungsstrategien sind jedoch ebenfalls möglich. Es ist weiterhin möglich, dass durch das Verändern eines Netzwerksegmentes eine weitere nicht-eindeutige Topologie im selben oder in einem anderen Netzwerksegment gebildet wird. In diesem Fall kann der Schritt 303 zum Verändern des virtuellen Netzwerkes mehrfach ausgeführt werden, bis alle nicht-eindeutigen Topologien im virtuellen Netzwerk aufgelöst sind, das heißt bis es keine zwei virtuellen Knoten mit identischen Merkmalsvektoren mehr gibt.

Fig. 4 bis Fig. 8 zeigen mögliche Veränderungen des geplanten virtuellen Netzwerkes für den in Fig. 1 dargestellten Fall einer nicht-eindeutigen Topologie eines Netzwerksegments. Das Planungswerkzeug kann solche nicht-eindeutigen Topologien erkennen, indem es die Merkmalsvektoren zweier virtueller Knoten vergleicht. Sind diese Merkmalsvektoren identisch, liegt eine nicht-eindeutige Topologie eines die betreffenden Knoten umfassenden Netzwerksegments vor. In dem in Fig. 1 gezeigten Beispiel sind die Merkmalsvektoren der Knoten des Typs T1 identisch, da ihr Typ und ihre Nachbarschaftsbeziehungen identisch sind.

Bei dem in Fig. 1 dargestellten Netzwerksegment sind zwei Knoten des Typs T1 in Form einer linearen Topologie über einen Knoten des Typs T2 verbunden. Der Knoten des Typs T2 weist jeweils zwei Ports auf, die in Fig. 1 nicht dargestellt sind.

Fig. 4 zeigt ein Beispiel einer gemäß dem vorgeschlagenen Verfahren geänderten Topologie eines Netzwerksegments. In diesem Fall wurde eine Änderungsstrategie angewendet, gemäß der ein Pfad zwischen dem linken Knoten T1 in Fig. 1 und dem rechten Knoten T1 in Fig. 1, der einen Nachbarknoten des linken Knoten T1 in Fig. 1 darstellt, geändert wurde. Weiterhin wurde der Pfad vom linken Knoten T1 zum Knoten T2 geändert. In dem gezeigten Fall kann das Verändern des Pfades auch als Vertauschen des Knotens T2 und des rechten Knotens T1, als Verändern von Kanten oder als Verändern der Sequenz der Knoten T1, T2, T2 aufgefasst werden.

Als das in Fig. 4 gezeigte Ergebnis dieser Änderungsstrategie ist nur noch ein Knoten des Typs T1 direkt mit dem Knoten des Typs T2 verbunden. So können die beiden gezeigten Knoten des Typs T1 aufgrund ihrer geänderten Merkmalsvektoren mit geänderten Nachbarschaftsinformationen zu ihren Nachbarknoten eindeutig voneinander unterschieden werden.

Fig. 5 zeigt ein weiteres Beispiel einer gemäß dem vorgeschlagenen Verfahren geänderten Topologie eines Netzwerksegments. In diesem Fall wurde eine Änderungsstrategie angewendet, bei der der Knotentyp des linken Knotens verändert wurde. Statt des Typs T1 weist der linke Knoten nun den Typ T1a auf. Vorzugsweise wird der Knotentyp in einen nur leicht vom ursprünglichen Knotentyp verschiedenen Knotentyp verändert, beispielsweise in einen Subtyp des ursprünglichen Knotentyps, der sich nur wenig in seinen Eigenschaften vom ursprünglichen Knotentyp unterscheidet. Ändern des Knotentyps bedeutet dabei, dass ein leicht verschiedener Knotentyp anstelle des ursprünglichen Knotentyps im virtuellen Netzwerk eingeplant wird, wobei aber die ursprüngliche Funktionalität des betreffenden Knoten im zu erstellenden Netzwerk erhalten bleibt.

Alternativ kann statt der Veränderung des Knotentyps eines Knotens dessen Liste von Attributen verändert werden. Die Liste von Attributen kann verwendet werden, um einen Knoten weiter zu spezifizieren und somit einerseits eine entsprechend verfeinerte Funktionalität des Knotens zu erreichen. Andererseits kann die Liste von Attributen für eine bessere Unterscheidbarkeit zu anderen Knoten genutzt werden. Eine Variante der Veränderung der Liste von Attributen eines Knotens stellt beispielsweise die Installation einer leicht verschiedenen Firmware dar. In diesem Fall wird die Firmware des linken Knotens T1 durch eine leicht verschiedene, beispielsweise etwas ältere oder etwas jüngere Firmware-Version ersetzt.

Somit sind der linke Knoten T1a und der rechte Knoten T1 wieder eindeutig voneinander unterscheidbar.

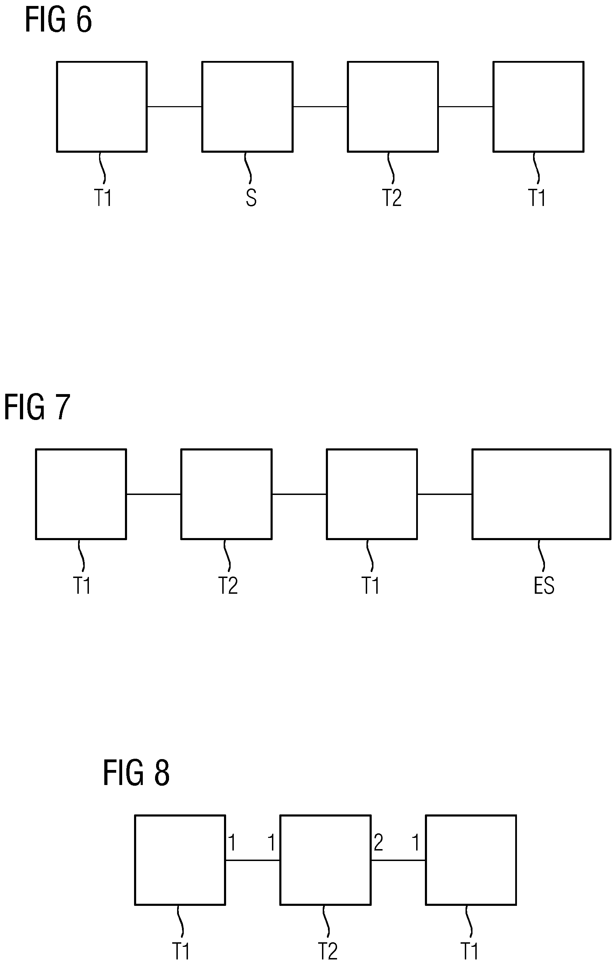

Fig. 6 zeigt ein weiteres Beispiel einer gemäß dem vorgeschlagenen Verfahren geänderten Topologie eines Netzwerksegments. In diesem Fall wurde eine Änderungsstrategie angewendet, bei der ein weiterer Knoten in die Sequenz der Knoten eingefügt wurde. Das Einfügen eines Switch-Knotens S bewirkt, dass nur noch einer der Knoten des Typs T1 direkt mit dem Knoten des Typs T2 verbunden ist. So können die beiden gezeigten Knoten des Typs T1 aufgrund ihrer geänderten Merkmalsvektoren mit geänderten Nachbarschaftsinformationen zu ihren Nachbarknoten wieder eindeutig voneinander unterschieden werden.

Fig. 7 zeigt ein weiteres Beispiel einer gemäß dem vorgeschlagenen Verfahren geänderten Topologie eines Netzwerksegments. In diesem Fall wurde eine Änderungsstrategie angewendet, bei der für den rechten Knoten des Typs T1 eine Nachbarschaftsbeziehung zur Engineering-Station ES zu seinen Nachbarschaftsinformationen hinzugefügt wurde. Die Engineering-Station ES stellt eine besondere Netzwerkeinrichtung im Netzwerk dar. Die Information der Nachbarschaft eines Knotens T1 zu dieser Engineering-Station ES ermöglicht es, den rechten Knoten des Typs T1 von dem linken Knoten des Typs T1 zu unterscheiden.

Fig. 8 zeigt ein weiteres Beispiel einer gemäß dem vorgeschlagenen Verfahren geänderten Topologie eines Netzwerksegments. In diesem Fall wurde eine Änderungsstrategie angewendet, bei der zur Liste der Attribute des linken Knotens und des rechtens Knotens des Typs T1 eine Angabe der Ports hinzugefügt wurde, über die die Knoten mit dem Knoten des Typs T2 verbunden sind. Im Planungswerkzeug für das virtuelle Netzwerk ist es möglich, Portverbindungs-Konfigurationen anzugeben. So kann wie in Fig. 8 dargestellt der linke Knoten des Typs T1 über den ersten Port des Knotens des Typs T2 mit dem Knoten des Typs T2 verbunden sein, während der rechte Knoten des Typs T1 über den zweiten Port des Knotens des Typs T2 mit dem Knoten des Typs T2 verbunden ist. Somit können der linke und der rechte Knoten des Typs T1 trotz identischen Typs eindeutig voneinander unterschieden werden.

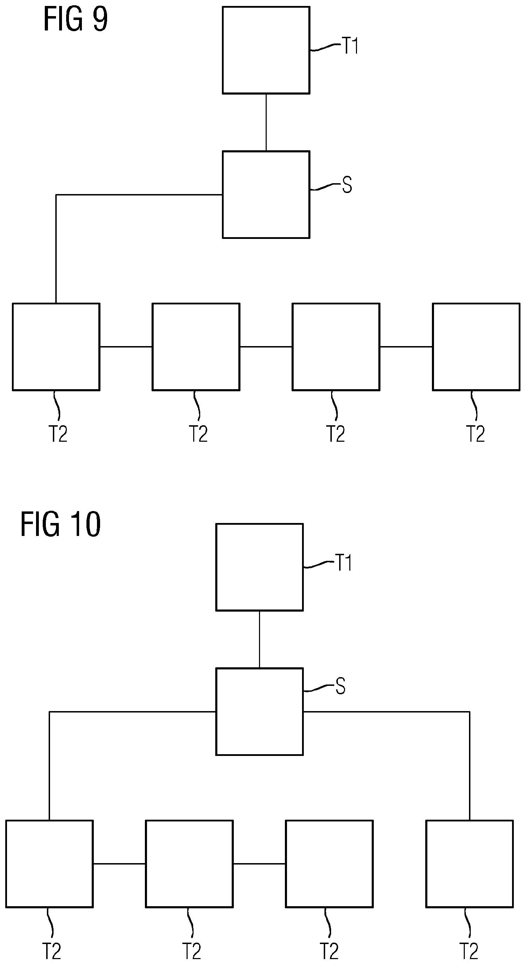

Fig. 9 bis 11 zeigen mögliche Veränderungen des geplanten virtuellen Netzwerkes für den in Fig. 2 dargestellten Fall einer nicht-eindeutigen sternförmigen Topologie eines Netzwerksegments.

Die in Fig. 9 gezeigte veränderte Topologie des Netzwerksegments aus Fig. 2 wurde durch Verändern von Pfaden in dem gezeigten Netzwerksegment erzeugt. Das Verändern von Pfaden kann dabei das Ändern, Einfügen oder Löschen von Kanten zwischen Knoten des Netzwerksegments umfassen. Nach dem Verändern des virtuellen Netzwerkes unterscheiden sich die Merkmalsvektoren der Knoten des Typs T2 voneinander, so dass jeder Knoten des Typs T2 eindeutig identifizierbar ist.

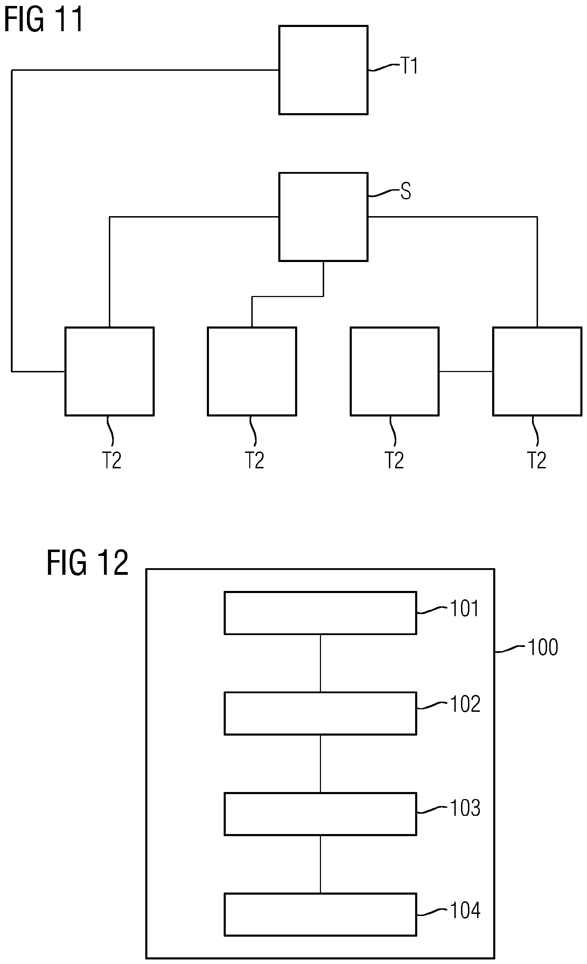

Fig. 10 und 11 zeigen alternative Veränderungen von Pfaden in dem gezeigten Netzwerksegment, die ebenfalls eine eindeutige Identifizierung jedes Knotens des Typs T2 ermöglichen.

In Fig. 12 ist ein Blockschaltbild einer Recheneinheit 100 zur Konfiguration einer Mehrzahl von physischen Knoten eines zu erstellenden Netzwerkes unter Verwendung eines virtuellen Netzwerkes dargestellt. Die Recheneinheit umfasst ein erstes Mittel 101 zum Erstellen des virtuellen Netzwerkes basierend auf dem zu erstellenden Netzwerk, wobei für jeden virtuellen Knoten je eine Konfiguration bestimmbar ist; ein zweites Mittel 102 zum Ermitteln eines Merkmalsvektors für jeden virtuellen Knoten, wobei der ermittelte Merkmalsvektor Nachbarschaftsinformationen zu Nachbarknoten des virtuellen Knotens und eine Typinformation zu einem Knotentyp des virtuellen Knotens umfasst; ein drittes Mittel 103 zum Verändern des virtuellen Netzwerkes, falls zumindest zwei ermittelte Merkmalsvektoren identisch sind, so dass jeder virtuelle Knoten eindeutig einem physischen Knoten zugeordnet wird; und ein viertes Mittel 104 zum Überspielen der Konfiguration jedes virtuellen Knotens auf den jeweiligen zugeordneten physischen Knoten.

Das vorgeschlagene Verfahren und die vorgeschlagene Recheneinheit ermöglichen eine Erweiterung bekannter Planungswerkzeuge für Netzwerke und insbesondere Automatisierungsnetzwerke, so dass symmetrische Netzwerksegmente schon während der Entwurfsphase vermieden werden können. Die resultierende, hinsichtlich Knotentypen asymmetrische Netzwerk-Topologie ermöglicht ein schnelles und insbesondere automatisches Konfigurieren des zu erstellenden Netzwerkes. Bei der Erstellung des Netzwerkes entsprechend dem resultierenden Entwurf kann jeder virtuelle Knoten des virtuellen Netzwerkes durch Topologie- und Typ-Detektion eindeutig auf den entsprechenden physischen Netzwerkknoten beziehungsweise die entsprechende Netzwerkeinrichtung im Netzwerk abgebildet werden. Im Ergebnis kann jeder physische Knoten, das heißt jede Netzwerkeinrichtung des Netzwerkes automatisch und damit insbesondere ohne zeitaufwändige und fehlerträchtige manuelle Benutzereingriffe konfiguriert werden. Ein manuelles Überprüfen und Zuweisen von MAC-Adressen ist nicht mehr notwendig. Auf diese Weise ermöglicht das vorgeschlagene Verfahren eine sehr schnelle und effiziente Planung, Entwicklung und Umsetzung von Netzwerken.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur rechnergestützten Konfiguration einer Mehrzahl von physischen Knoten eines zu erstellenden Netzwerkes unter Verwendung eines virtuellen Netzwerkes mittels einer Recheneinheit (100), wobei das virtuelle Netzwerk für jeden physischen Knoten je einen virtuellen Knoten umfasst, mit den Schritten:
Erstellen (301) des virtuellen Netzwerkes basierend auf dem zu erstellenden Netzwerk, wobei für jeden virtuellen Knoten je eine Konfiguration bestimmt wird;
Ermitteln (302) eines Merkmalsvektors für jeden virtuellen Knoten, wobei der ermittelte Merkmalsvektor Nachbarschaftsinformationen zu Nachbarknoten des virtuellen Knotens und eine Typinformation zu einem Knotentyp des virtuellen Knotens umfasst;
Verändern (303) des virtuellen Netzwerkes, falls zumindest zwei ermittelte Merkmalsvektoren identisch sind, so dass jeder virtuelle Knoten eindeutig einem physischen Knoten zugeordnet wird; und
Überspielen (304) der Konfiguration jedes virtuellen Knotens auf den jeweiligen zugeordneten physischen Knoten, wobei das Verändern des virtuellen Netzwerkes ein Verändern von zumindest einem Pfad zwischen einem virtuellen Knoten, für welchen einer der zumindest zwei identischen Merkmalsvektoren ermittelt ist, und dessen Nachbarknoten umfasst.

2. Verfahren nach Anspruch 1,
**dadurch gekennzeichnet,**
**dass** der ermittelte Merkmalsvektor jedes virtuellen Knotens ferner eine Liste von Attributen des virtuellen Knotens umfasst.

3. Verfahren nach Anspruch 1 bis 2,
**dadurch gekennzeichnet,**
**dass** das Verändern des virtuellen Netzwerkes ein Verändern einer Sequenz von Nachbarknoten eines virtuellen Knotens umfasst, für welchen einer der zumindest zwei identischen Merkmalsvektoren ermittelt ist.

4. Verfahren nach Anspruch 3,
**dadurch gekennzeichnet,**
**dass** das Verändern der Sequenz der Nachbarknoten des virtuellen Knotens, für welchen einer der zumindest zwei identischen Merkmalsvektoren ermittelt ist, ein Einfügen mindestens eines weiteren virtuellen Knotens in die Sequenz der Nachbarknoten umfasst.

5. Verfahren nach Anspruch 1 bis 4,
**dadurch gekennzeichnet,**
**dass** das Verändern des virtuellen Netzwerkes ein Verändern des Knotentyps eines virtuellen Knotens umfasst, für welchen einer der zumindest zwei identischen Merkmalsvektoren ermittelt ist.

6. Verfahren nach Anspruch 2 bis 5,
**dadurch gekennzeichnet,**
**dass** das Verändern des virtuellen Netzwerkes ein Verändern der Liste von Attributen eines virtuellen Knotens umfasst, für welchen einer der zumindest zwei identischen Merkmalsvektoren ermittelt ist.

7. Verfahren nach Anspruch 6,
**dadurch gekennzeichnet,**
**dass** das Verändern der Liste von Attributen ein Hinzufügen einer Angabe von Ports umfasst, über die der virtuelle Knoten, für welchen einer der zumindest zwei identischen Merkmalsvektoren ermittelt ist, mit einem direkten Nachbarknoten verbunden ist.

8. Verfahren nach Anspruch 1 bis 7,
**dadurch gekennzeichnet,**
**dass** das Verändern des virtuellen Netzwerkes ein Hinzufügen einer Nachbarschaftsbeziehung zu einem ausgezeichneten Knoten des Netzwerkes zu den Nachbarschaftsinformationen eines virtuellen Knotens umfasst, für welchen einer der zumindest zwei identischen Merkmalsvektoren ermittelt ist.

9. Verfahren nach Anspruch 1 bis 8,
**dadurch gekennzeichnet,**
**dass** eine Konfiguration zumindest eine IP-Adresse, eine Knotenbezeichnung und eine Knotenprogrammierung umfasst.

10. Verfahren nach Anspruch 1 bis 9,
**dadurch gekennzeichnet,**
**dass** jeder physische Knoten eindeutig durch eine Netzwerkadresse identifiziert wird.

11. Verfahren nach Anspruch 1 bis 10,
**dadurch gekennzeichnet,**
**dass** das Netzwerk als Automatisierungsnetzwerk ausgestaltet ist.

12. Computerprogrammprodukt, welches auf einer programmgesteuerten Einrichtung die Durchführung eines Verfahrens nach einem der Ansprüche 1 bis 11 veranlasst.

13. Datenträger mit einem gespeicherten Computerprogramm mit Befehlen, welche die Durchführung eines Verfahrens nach einem der Ansprüche 1 bis 11 auf einer programmgesteuerten Einrichtung veranlasst.

14. Recheneinheit (100) zur Konfiguration einer Mehrzahl von physischen Knoten eines zu erstellenden Netzwerkes unter Verwendung eines virtuellen Netzwerkes, wobei das virtuelle Netzwerk für jeden physischen Knoten je einen virtuellen Knoten umfasst, wobei die Recheneinheit (100) umfasst:
ein erstes Mittel (101) zum Erstellen des virtuellen Netzwerkes basierend auf dem zu erstellenden Netzwerk, wobei für jeden virtuellen Knoten je eine Konfiguration bestimmbar ist;
ein zweites Mittel (102) zum Ermitteln eines Merkmalsvektors für jeden virtuellen Knoten, wobei der ermittelte Merkmalsvektor Nachbarschaftsinformationen (Topⱼ) zu Nachbarknoten des virtuellen Knotens und eine Typinformation (Tⱼ) zu einem Knotentyp des virtuellen Knotens umfasst;
ein drittes Mittel (103) zum Verändern des virtuellen Netzwerkes, falls zumindest zwei ermittelte Merkmalsvektoren identisch sind, so dass jeder virtuelle Knoten eindeutig einem physischen Knoten zugeordnet wird; und
ein viertes Mittel (104) zum Überspielen der Konfiguration jedes virtuellen Knotens auf den jeweiligen zugeordneten physischen Knoten, wobei das Verändern des virtuellen Netzwerkes ein Verändern von zumindest einem Pfad zwischen einem virtuellen Knoten, für welchen einer der zumindest zwei identischen Merkmalsvektoren ermittelt ist, und dessen Nachbarknoten umfasst.

## Claims

1. Method for the computer-aided configuration of a plurality of physical nodes of a network to be created using a virtual network by means of a computation unit (100), the virtual network comprising a virtual node for each physical node, having the steps of:
creating (301) the virtual network on the basis of the network to be created, a configuration being determined for each virtual node;
determining (302) a feature vector for each virtual node, the determined feature vector comprising neighbourhood information relating to neighbouring nodes of the virtual node and an item of type information relating to a node type of the virtual node;
changing (303) the virtual network if at least two determined feature vectors are identical, with the result that each virtual node is uniquely assigned to a physical node; and
loading (304) the configuration of each virtual node onto the respective assigned physical node, the operation of changing the virtual network comprising changing at least one path between a virtual node, for which one of the at least two identical feature vectors has been determined, and its neighbouring nodes.

2. Method according to Claim 1,
**characterized in that**
the determined feature vector of each virtual node also comprises a list of attributes of the virtual node.

3. Method according to Claims 1 to 2,
**characterized in that**
the operation of changing the virtual network comprises changing a sequence of neighbouring nodes of a virtual node for which one of the at least two identical feature vectors has been determined.

4. Method according to Claim 3,
**characterized in that**
the operation of changing the sequence of the neighbouring nodes of the virtual node, for which one of the at least two identical feature vectors has been determined, comprises inserting at least one further virtual node into the sequence of neighbouring nodes.

5. Method according to Claims 1 to 4,
**characterized in that**
the operation of changing the virtual network comprises changing the node type of a virtual node for which one of the at least two identical feature vectors has been determined.

6. Method according to Claims 2 to 5,
**characterized in that**
the operation of changing the virtual network comprises changing the list of attributes of a virtual node for which one of the at least two identical feature vectors has been determined.

7. Method according to Claim 6,
**characterized in that**
the operation of changing the list of attributes comprises adding an indication of ports via which the virtual node, for which one of the at least two identical feature vectors has been determined, is connected to a direct neighbouring node.

8. Method according to Claims 1 to 7,
**characterized in that**
the operation of changing the virtual network comprises adding a neighbourhood relationship with respect to a marked node of the network to the neighbourhood information relating to a virtual node for which one of the at least two identical feature vectors has been determined.

9. Method according to Claims 1 to 8,
**characterized in that**
a configuration comprises at least one IP address, a node designation and node programming.

10. Method according to Claims 1 to 9,
**characterized in that**
each physical node is uniquely identified by a network address.

11. Method according to Claims 1 to 10,
**characterized in that**
the network is in the form of an automation network.

12. Computer program product which causes a method according to one of Claims 1 to 11 to be carried out on a program-controlled device.

13. Data storage medium having a stored computer program with instructions which cause a method according to one of Claims 1 to 11 to be carried out on a program-controlled device.

14. Computation unit (100) for configuring a plurality of physical nodes of a network to be created using a virtual network, the virtual network comprising a virtual node for each physical node, the computation unit (100) comprising:
a first means (101) for creating the virtual network on the basis of the network to be created, a configuration being able to be determined for each virtual node;
a second means (102) for determining a feature vector for each virtual node, the determined feature vector comprising neighbourhood information (Topⱼ) relating to neighbouring nodes of the virtual node and an item of type information (Tⱼ) relating to a node type of the virtual node;
a third means (103) for changing the virtual network if at least two determined feature vectors are identical, with the result that each virtual node is uniquely assigned to a physical node; and
a fourth means (104) for loading the configuration of each virtual node onto the respective assigned physical node, the operation of changing the virtual network comprising changing at least one path between a virtual node, for which one of the at least two identical feature vectors has been determined, and its neighbouring nodes.

## Revendications

1. Procédé pour la configuration assistée par ordinateur d'une pluralité de noeuds physiques d'un réseau à créer avec utilisation d'un réseau virtuel au moyen d'une unité de calcul (100), le réseau virtuel comprenant un noeud virtuel pour chaque noeud physique, comportant les étapes suivantes :
création (301) du réseau virtuel sur la base du réseau à créer, une configuration étant déterminée pour chaque noeud virtuel ;
détermination (302) d'un vecteur de caractéristique pour chaque noeud virtuel, le vecteur de caractéristique déterminé comprenant des informations de voisinage de noeuds voisins du noeud virtuel et une information de type relative à un type de noeud du noeud virtuel ;
modification (303) du réseau virtuel si au moins deux vecteurs de caractéristiques déterminés sont identiques, de sorte que chaque noeud virtuel est associé univoquement à un noeud physique ; et
transfert (304) de la configuration de chaque noeud virtuel au noeud physique respectivement associé, la modification du réseau virtuel incluant une modification d'au moins un chemin entre un noeud virtuel pour lequel l'un des au moins deux vecteurs de caractéristiques identiques est déterminé, et son noeud voisin.

2. Procédé selon la revendication 1, **caractérisé en ce que** le vecteur de caractéristique déterminé de chaque noeud virtuel comprend en outre une liste d'attributs du noeud virtuel.

3. Procédé selon la revendication 1 à 2, **caractérisé en ce que** la modification du réseau virtuel inclut une modification d'une séquence de noeuds voisins d'un noeud virtuel pour lequel l'un des au moins deux vecteurs de caractéristiques identiques est déterminé.

4. Procédé selon la revendication 3, **caractérisé en ce que** la modification de la séquence des noeuds voisins du noeud virtuel pour lequel l'un des au moins deux vecteurs de caractéristiques identiques est déterminé inclut une insertion d'au moins un autre noeud virtuel dans la séquence des noeuds voisins.

5. Procédé selon la revendication 1 à 4, **caractérisé en ce que** la modification du réseau virtuel inclut une modification du type de noeud d'un noeud virtuel pour lequel l'un des au moins deux vecteurs de caractéristiques identiques est déterminé.

6. Procédé selon la revendication 2 à 5, **caractérisé en ce que** la modification du réseau virtuel inclut une modification de la liste d'attributs d'un noeud virtuel pour lequel l'un des au moins deux vecteurs de caractéristiques identiques est déterminé.

7. Procédé selon la revendication 6, **caractérisé en ce que** la modification de la liste d'attributs inclut un ajout d'une mention de ports via lesquels le noeud virtuel pour lequel l'un des au moins deux vecteurs de caractéristiques identiques est déterminé, est relié à un noeud voisin direct.

8. Procédé selon la revendication 1 à 7, **caractérisé en ce que** la modification du réseau virtuel inclut un ajout d'une relation de voisinage concernant un noeud désigné du réseau aux informations de voisinage d'un noeud virtuel pour lequel l'un des au moins deux vecteurs de caractéristiques identiques est déterminé.

9. Procédé selon la revendication 1 à 8, **caractérisé en ce qu'**une configuration comprend au moins une adresse IP, une désignation de noeud et une programmation de noeud.

10. Procédé selon la revendication 1 à 9, **caractérisé en ce que** chaque noeud physique est identifié univoquement par une adresse de réseau.

11. Procédé selon la revendication 1 à 10, **caractérisé en ce que** le réseau est conçu en tant que réseau d'automatisation.

12. Produit de programme informatique qui fait exécuter sur un dispositif commandé par programme un procédé selon l'une des revendications 1 à 11.

13. Support de données comportant un produit informatique stocké avec des ordres qui font exécuter sur un dispositif commandé par programme un procédé selon l'une des revendications 1 à 11.

14. Unité de calcul (100) destinée à configurer une pluralité de noeuds physiques d'un réseau à créer avec utilisation d'un réseau virtuel, le réseau virtuel un noeud virtuel pour chaque noeud physique, l'unité de calcul (100) comprenant :
un premier moyen (101) pour créer le réseau virtuel sur la base du réseau à créer, une configuration pouvant être déterminée pour chaque noeud virtuel ;
un deuxième moyen (102) pour déterminer un vecteur de caractéristique pour chaque noeud virtuel, le vecteur de caractéristique déterminé comprenant des informations de voisinage (Topj) sur les noeuds voisins du noeud virtuel et une information de type (Tj) sur un type de noeud du noeud virtuel ;
un troisième moyen (103) pour modifier le réseau virtuel si au moins deux vecteurs de caractéristiques déterminés sont identiques, de sorte que chaque noeud est associé univoquement à un noeud physique ; et
un quatrième moyen (104) pour transférer la configuration de chaque noeud virtuel au noeud physique associé respectif, la modification du réseau virtuel incluant une modification d'au moins un chemin entre un noeud virtuel pour lequel l'un des au moins deux vecteurs de caractéristiques identiques est déterminé, et son noeud voisin.
